(19) **Europäisches Patentamt / European Patent Office / Office européen des brevets**

(11) **EP 3 258 574 A1**

(12) **EUROPEAN PATENT APPLICATION**
published in accordance with Art. 153(4) EPC

(43) Date of publication:
**20.12.2017 Bulletin 2017/51**

(21) Application number: **16749169.5**

(22) Date of filing: **05.02.2016**

(51) Int Cl.:
***H02K 3/18*** *(2006.01)*

(86) International application number:
**PCT/JP2016/053529**

(87) International publication number:
**WO 2016/129525 (18.08.2016 Gazette 2016/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.02.2015 JP 2015023554**

(71) Applicants:
• **Sumitomo Seika Chemicals Co., Ltd.**
  **Hyogo 675-0145 (JP)**
• **National Institute of Advanced Industrial Science and Technology**
  **Tokyo 100-8921 (JP)**

(72) Inventors:
• **HAYASHIZAKA Noriyuki**
  **Hyogo 675-0145 (JP)**
• **MISHOU Daisuke**
  **Hyogo 675-0145 (JP)**
• **EBINA Takeo**
  **Sendai-shi**
  **Miyagi 983-8551 (JP)**
• **HATTORI Satomi**
  **Fukuroi-shi**
  **Shizuoka 437-8555 (JP)**
• **ISHIDA Takahiro**
  **Fukuroi-shi**
  **Shizuoka 437-8555 (JP)**

(74) Representative: **Nederlandsch Octrooibureau**
**P.O. Box 29720**
**2502 LS The Hague (NL)**

(54) **ROTATING ELECTRIC MACHINE, COIL, AND COIL DEVICE**

(57)     Provided are a rotating electric machine, and a coil and coil device used in the rotating electric machine capable of improving performance. The rotating electric machine (1) includes: a stator (3) having an iron core section (7) having a main body part (10) having a circular profile and a plurality of cores (12) that protrude from a circumferential surface (10a) of the main body part (10) and are provided at predetermined intervals in a circumferential direction of the circumferential surface (10a), and coils (9) arranged on the cores (12); and a rotor (5) provided to be freely rotatable. Each of the coils (9) includes a coil section (20) formed in a spiral shape from a conductive member (21) having conductivity and terminal parts (22a, 22b) connected to opposite ends of the coil section (20). A width dimension of the coil section (20) gradually increases from one side to the other side in a direction of an axis (L) of the coil section (20), and an insulating film (24) having an electrical insulation property is provided on a surface (21a) of the conductive member (21) of the coil section (20).

*Fig.3*

**Description**

**Technical Field**

The present invention relates to a rotating electric machine, a coil, and a coil device.

**Background Art**

A rotating electric machine including a stator, which has an iron core section with cores and coils set up on the cores, and a rotor, which is rotated relative to the stator, is known as a conventional rotating electric machine (for example, Patent Literatures 1 to 4 and Non-Patent Literature 1).

**Citation List**

**Patent Literature**

[**Patent Literature 1**] Japanese Unexamined Patent Publication No. 2006-101606

[**Patent Literature 2**] Japanese Unexamined Patent Publication No. 2006-254638

[**Patent Literature 3**] Japanese Unexamined Patent Publication No. 2003-116236

[**Patent Literature 4**] Japanese Unexamined Patent Publication No. 2008-172866

**Non-Patent Literature**

[**Non-Patent Literature 1**] Shinji Makita, et al., "Permanent magnet synchronous motor having new winding structure reconciling high winding factor and high space factor," the journal D of the institute of electricl engineers (the IEEJ transactions on industry applications), IEEJ Transactions on Industry Applications, Vol. 134, No.12, pp 1031-1037, June 2014

**Summary of Invention**

**Technical Problem**

In the rotating electric machine described in Patent Literature 1, coils formed by concentrically winding an enamel wire are used. In the rotating electric machine using the concentrated winding, a rotating magnetic field easily becomes a square wave, and torque ripples are generated by harmonic components. Thereby, there is a possibility of rotation becoming uneven and vibration or noise increasing. The unevenness of the rotation can be measured by checking distortion of an induced electromotive force generated by the rotation of the motor. In the rotating electric machine described in Patent Literature 1, the shape of a space defined between the neighboring cores is a specific shape, and thereby a problem with the torque ripples is solved. However, in the rotating electric machine described in Patent Literature 1, the distortion can be still generated from the waveform of the induced electromotive force.
As a method of removing the distortion of the waveform of the induced electromotive force, in the rotating electric machine described in Patent Literature 2, an enamel wire is subjected to distributed winding. However, in the case of the distributed winding, since ends of coils are long compared to the concentrated winding, there occurs a problem that a length of the enamel wire is increased and winding resistance is increased. To suppress a variation in torque, there is a configuration in which a flywheel is provided and weighed. However, in this configuration, there is a problem that responsiveness of a rotational frequency of the rotating electric machine is reduced.
In order to approximate the waveform of the induced electromotive force to a sine wave, in the rotating electric machine described in Patent Literature 3, when an axis extending in a direction of magnetic poles of the rotor is set as a d axis, and an axis extending in a direction of the centers of the magnetic poles and a direction between the magnetic poles which is shifted at an electrical angle by 90 degrees is set as a q axis, an outer circumferential surface of a rotor iron core is configured such that a radial distance from the center of the rotor iron core to an outer circumference of the rotor is shortened from the d axis to the q axis. However, a high level of technique is required to manufacture this iron core, and a manufacturing cost is increased. In addition, a dedicated special winding machine is required to wind the coil. In Patent Literature 4, a current flowing to the rotating electric machine is controlled, and thereby the torque ripples are reduced. However, a method of controlling the rotating electric machine is not a fundamental solution of the torque ripples, and performance of the rotating electric machine itself cannot be improved.

Further, in the motor of Non-Patent Literature 1, a manufacturing method thereof is extremely complicated, and realization of mass-production is difficult. Since the motor adopts an intermediate winding method between the distributed winding and the concentrated winding, there is a problem that ends of the coil become longer, and resistance to the winding is increased.

There is a possibility of an increase in the unevenness of the rotation or winding resistance caused by these torque ripples or the like being represented as a reduction in motor efficiency and causing a reduction in overall motor performance. Therefore, the overall motor performance can be evaluated by measuring the motor efficiency.

The present invention is directed to providing a rotating electric machine capable of improving performance, and a coil and coil device used in the rotating electric machine.

**Solution to Problem**

A rotating electric machine according to an aspect of the present invention includes: a stator having an iron core section with a main body part that has a circular circumferential surface and a plurality of cores that protrude from the circumferential surface of the main body part in a radial direction of the main body part and are provided at predetermined intervals in a circumferential direction of the circumferential surface, and coils arranged on the cores; and a rotor configured to rotate relative to the stator. Each of the coils includes a coil section that is formed in a spiral shape from a conductive member having conductivity, and terminal parts that are connected to opposite ends of the coil section. A width dimension of the coil section gradually increases from one side to the other side in a direction of an axis of the coil section. An insulating film having an electrical insulation property is provided on a surface of the conductive member of the coil section.

In this rotating electric machine, the cores are provided to protrude from the circumferential surface of the main body part in the radial direction of the main body part. In this configuration, a fan-like space is defined between the neighboring the cores. In this configuration, the width dimension of the coil section gradually increases from one side to the other side in the direction of the axis of the coil section. With this configuration, since the coils are arranged on the cores, a space factor of the coil section can be enhanced in the fan-like space defined by the cores. The insulating film having an electrical insulation property is provided on the surface of the conductive member of the coil section. For this reason, the generation of creeping discharge or the like between the conductive members is suppressed. In the rotating electric machine having the coils, the distortion of a waveform of an induced electromotive force generated by rotation can be suppressed. Therefore, in the rotating electric machine, the generation of torque ripples can be suppressed, and the rotation of the rotor is made uniform. As a result, in the rotating electric machine, the performance can be improved. The improvement of this performance can be evaluated by measuring efficiency of the rotating electric machine.

In an embodiment, a waveform of an induced electromotive force generated by rotation may be a sine wave or a quasi-sine wave.

In an embodiment, the rotating electric machine may be an inner rotor type three-phase motor.

A coil according to an aspect of the present invention is a coil arrange on a core, and includes: a coil section formed in a spiral shape from a conductive member having conductivity; and terminal parts connected to opposite ends of the coil section. A width dimension of the coil section gradually increases from one side to the other side in a direction of an axis of the coil section, and an insulating film having an electrical insulation property is provided on a surface of the conductive member of the coil section.

In this coil, the width dimension of the coil section gradually increases from one side to the other side in the direction of the axis of the coil section. Thereby, for example, in a configuration in which a plurality of cores are arranged in a circumferential direction, the coils are arranged on the cores such that one side of the coil section is located at a base end side of each core with respect to each core, and thereby a space factor of the coil section can be enhanced in a fan-like space defined by the cores. In the coil, the insulating film having an electrical insulation property is provided on the surface of the conductive member of the coil section. Thereby, the electrical insulation property between the conductive members can be secured. As a result, the generation of creeping discharge or the like between the conductive members can be suppressed. In the rotating electric machine using this coil, the distortion of a waveform of the induced electromotive force generated by rotation can be suppressed. Therefore, in the rotating electric machine using this coil, the generation of torque ripples can be suppressed, and the rotation of the rotor is made uniform. As a result, in the rotating electric machine using the coil, the performance can be improved. The improvement of this performance can be evaluated by measuring efficiency of the rotating electric machine.

In an embodiment, the insulating film may be formed by dip coating or electrodeposition coating. Thereby, the insulating film can be well formed on the surface of the conductive member.

In an embodiment, the corners of the conductive member may be chamfered. When the corners of the conductive member are approximately right angles, it is difficult for the insulating film to be formed on the corners, and it is easy for the insulating film to peel off at the corners. The insulating film can be well formed even at the corners by chamfering the corners of the conductive member. Therefore, the insulation property can be even more secured in the coil section.

In an embodiment, the coil section may be formed by joining the plurality of conductive members. Thereby, a desired shape of the coil section can be easily formed. In this way, the coil section is formed by joining the plurality of conductive members, and thereby an inside shape of the coil section can be formed in a desired shape. For this reason, when the coil is arranged on the core, the formation of a gap between the core and the coil section can be suppressed. As a result, the space factor of the coil can be enhanced.

In an embodiment, a cross-sectional area of the conductive member on a plane orthogonal to an extending direction of the conductive member may be uniform throughout a circumference of the coil section. Thereby, a value of electrical resistance in the coil section becomes constant. For this reason, the performance as the coil can be improved.

In an embodiment, the insulating film may have a thickness of 10 $\mu$m or more. Thereby, the insulation property between the conductive members can be secured in the coil section, and the creeping discharge can be suppressed.

A coil device according to an aspect of the present invention includes: an iron core section having a main body part that has a circular circumferential surface and a plurality of cores that protrude from the circumferential surface of the main body part in a radial direction of the main body part and are provided at predetermined intervals in a circumferential direction of the circumferential surface; and coils arranged on the cores. Each of the coils includes a coil section that is formed in a spiral shape from a conductive member having conductivity, and terminal parts that are connected to opposite ends of the coil section. A width dimension of the coil section gradually increases from one side to the other side in a direction of an axis of the coil section, and an insulating film having an electrical insulation property is provided on a surface of the conductive member of the coil section.

In this coil device, the cores are provided to protrude from the circumferential surface of the main body part in the radial direction of the main body part. In this configuration, a fan-like space is defined between the neighboring the cores. In this configuration, the width dimension of the coil section gradually increases from one side to the other side in the direction of the axis of the coil section. With this configuration, since the coils are arranged on the cores, a space factor of the coil section can be enhanced in the fan-like space defined by the cores. The insulating film having an electrical insulation property is provided on the surface of the conductive member of the coil section. For this reason, the generation of creeping discharge or the like between the conductive members is suppressed. In the rotating electric machine using the coil device having the coils, the distortion of a waveform of an induced electromotive force generated by rotation can be suppressed. Therefore, in the rotating electric machine using the coil device, the generation of torque ripples can be suppressed, and the rotation of the rotor is made uniform. As a result, in the rotating electric machine using the coil device, the performance can be improved. The improvement of this performance can be evaluated by measuring efficiency of the rotating electric machine.

**Advantageous Effects of Invention**

According to the present invention, performance can be improved.

**Brief Description of Drawings**

FIG. 1 is a view illustrating a motor according to an embodiment.
FIG. 2 is an enlarged sectional view illustrating a part of the motor illustrated in FIG. 1.
FIG. 3 is a perspective view illustrating a coil.
FIG. 4 is a top view of the coil illustrated in FIG. 3.
FIG. 5 is a sectional view taken along line V-V of FIG. 4.
FIG. 6 is a diagram illustrating waveforms of an induced electromotive force of the motor according to the present embodiment.
FIG. 7 is a diagram illustrating waveforms of an induced electromotive force of a motor according to a comparative example.
FIG. 8 is a view illustrating a modification of the motor.
FIG. 9 is a diagram for illustrating a distortion factor.
FIG. 10 is a diagram illustrating a relationship of motor efficiency to rotational frequency and torque of the motor according to the present embodiment.
FIG. 11 is a diagram illustrating a relationship of motor efficiency to rotational frequency and torque of the motor according to the comparative example.
FIG. 12 is a diagram illustrating motor efficiency and rate.

## Description of Embodiments

Hereinafter, a preferred embodiment of the present invention will be described in detail with reference to the attached drawings. In the description of the drawings, identical or equivalent elements are designated with the same reference signs, and duplicate description thereof will be omitted.

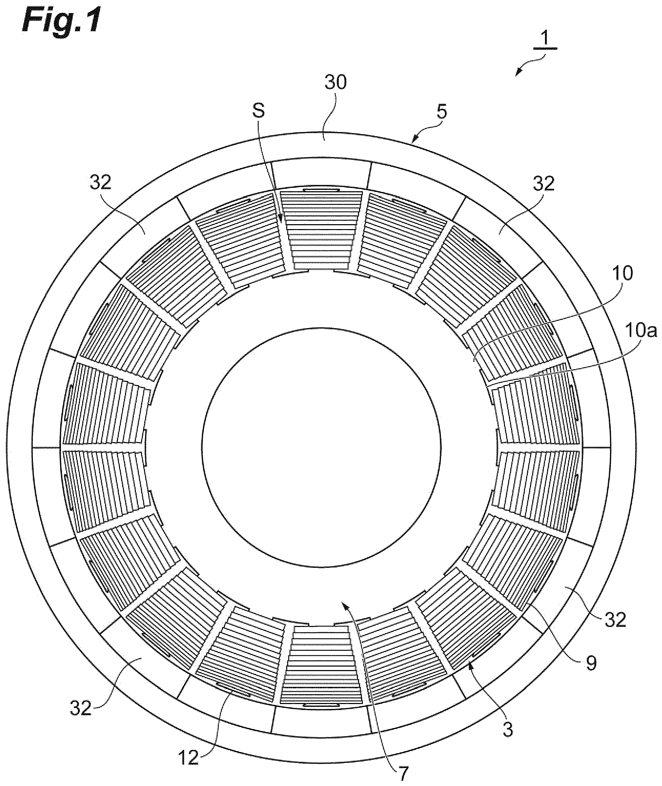

FIG. 1 is a view illustrating a motor according to an embodiment. As illustrated in FIG. 1, a motor (a rotating electric machine) 1 is, for example, an outer rotor type of brushless motor (three-phase motor). The motor 1 includes a stator (a coil device) 3 and a rotor 5.

The stator 3 has an iron core section 7 and coils 9. The iron core section 7 has an annular part (a main body part) 10 with an annular shape, and cores 12. The annular part 10 and the cores 12 are, for instance, formed in one body. The annular part 10 and the cores 12 are formed, for instance, by stacking a plurality of electrical steel sheets.

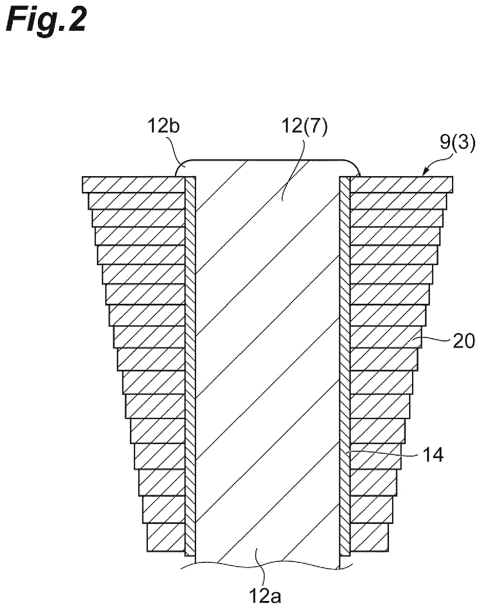

As illustrated in FIG. 2, the cores 12 are provided to protrude outward from an outer circumferential surface 10a of the annular part 10 in a radial direction of the annular part 10. A plurality of cores 12 are arranged at predetermined intervals in a circumferential direction of the outer circumferential surface 10a of the annular part 10. The cores 12 have, for instance, a prismatic shape. A fan-like space S is defined between the two neighboring cores 12 by the two cores 12.

Each of the cores 12 has a main body part 12a and a flange part 12b. The main body part 12a extends in the radial direction of the annular part 10, and a base end side thereof is connected to the annular part 10. The flange part 12b is provided at a tip portion of the main body part 12a in a longitudinal direction (an extending direction) of the main body part 12a. The flange part 12b is projected outward from the main body part 12a in a width direction.

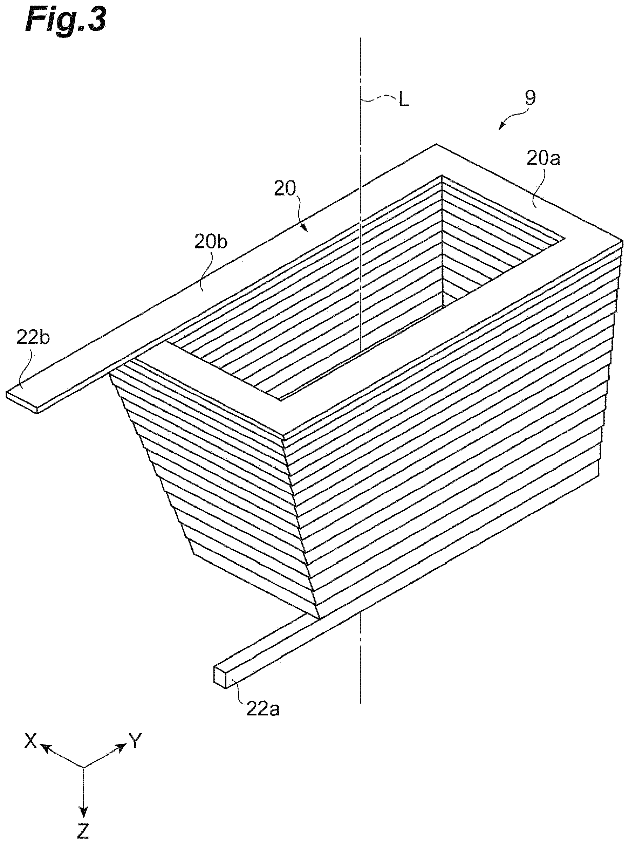

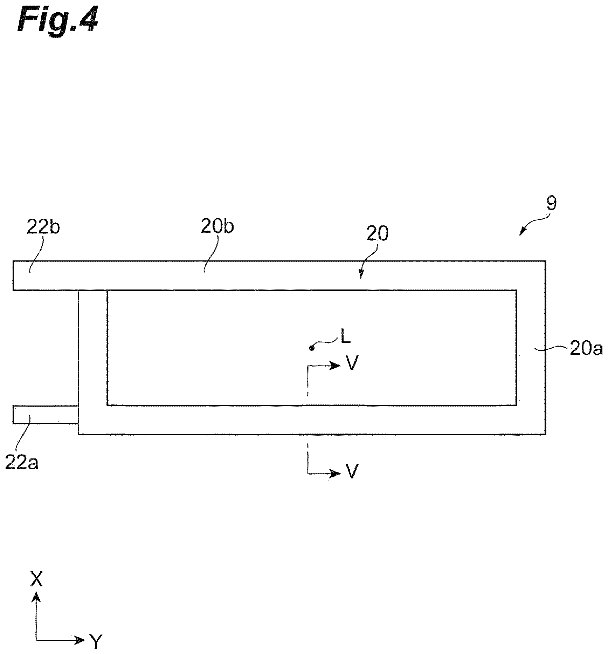

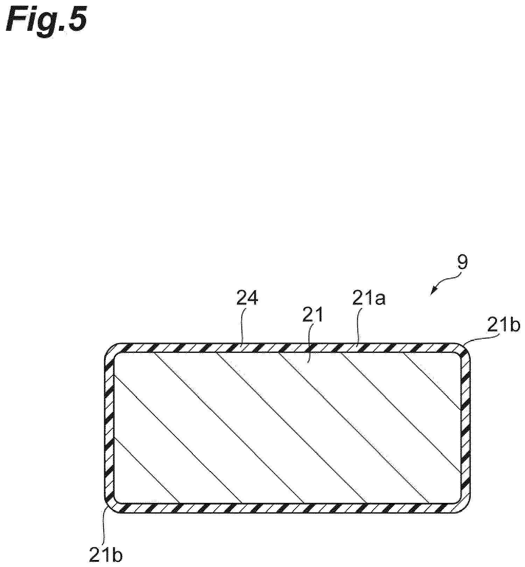

FIG. 3 is a perspective view illustrating a coil. FIG. 4 is a top view of the coil illustrated in FIG. 3. FIG. 5 is a sectional view taken along line V-V of FIG. 4. As illustrated in FIGS. 3 to 5, each of the coils 9 includes a coil section 20 and terminal parts 22a and 22b. The coil section 20 and the terminal parts 22a and 22b are electrically connected. The coil section 20 and the terminal parts 22a and 22b are formed of a conductive member 21 (see FIG. 5) having conductivity. A material of the conductive member 21 is not particularly limited but, for instance, copper (Cu) may be used as the material.

The coil section 20 is formed to be wound in a spiral shape. As illustrated in FIGS. 2 and 3, the coil section 20 has a width dimension continuously increased from one side to the other side in a direction of an axis L of the coil section 20 (from a downward direction to an upward direction in FIG. 3). That is, when viewed in a direction along a plane orthogonal to the direction of the axis L, the coil section 20 has an approximately trapezoidal shape. In the coil section 20, a cross-sectional area of the conductive member 21 on a plane orthogonal to an extending direction of the conductive member 21 is uniform throughout the circumference of the coil section 20.

An inner side of the coil section 20 has a shape corresponding to a profile of each of the cores 12. In the present embodiment, each of the cores 12 has a rectangular (oblong) profile, and accordingly the inner side of the coil section 20 has a rectangular (oblong) shape when viewed in the direction of the axis L of the coil section 20 as illustrated in FIG. 4. The shape of the inner side of the coil section 20 may be properly set according to the profile of each of the cores 12.

The coil section 20 having the above configuration is formed by joining a plurality of conductive members 21. To be specific, the coil section 20 is formed, for instance, by joining a first portion 20a that extends linearly in an X-axial direction in FIGS. 3 and 4 and a second portion 20b that extends linearly in a Y-axial direction. For the junction between the first portion 20a and the second portion 20b, a method such as cold pressure welding, electric welding, high-frequency welding, brazing, or the like may be adopted.

As illustrated in FIG. 5, an insulating film 24 is provided on an entire surface 21a of the conductive member 21 of the coil section 20. The insulating film 24 is a film (a portion) having an electrical insulation property. The insulating film 24 is a synthetic resin having an electrical insulation property. The synthetic resin preferably includes a polyester resin, a polyurethane resin, an epoxy resin, a polyimide resin, a polyamide-imide resin, an esterimide resin, and so on. Particularly, from the viewpoint of heat resistance, the polyimide resin, the polyamide-imide resin, and the esterimide resin are preferred, and the polyimide resin is further preferred. To improve partial discharge resistance, it is further preferred that a filler be mixed with the insulating film 24. The filler is not particularly limited, but an inorganic oxide such as silica, alumina, or boehmite alumina, a swellable clay such as smectite, a non-swelling clay such as talc or mica, or a layered double hydroxide such as hydrotalcite, etc. may be used.

For example, dip coating or electrodeposition coating may be used as a method for forming the insulating film 24. After the coil section 20 is formed, the insulating film 24 is formed on each of the conductive members 21 of the coil section 20. In detail, the insulating film 24 is formed after the coil section 20 is formed by joining the first portion 20a and the second portion 20b.

A thickness dimension of the insulating film 24 is preferably greater than or equal to 10 $\mu$m, and more preferably greater than or equal to 10 $\mu$m and smaller than or equal to 50 $\mu$m. The thickness of the insulating film 24 may be adequately set according to design of the coil section 20. The thickness of the insulating film 24 may be constant throughout the circumference of the coil section 20, or be different in different portions of the coil section 20. Dielectric breakdown voltage (withstand voltage) of the insulating film 24 is preferably higher than or equal to 1 kV, for instance, when the thickness dimension is 10 μm, and higher than or equal to 4 kV, for instance, when the thickness dimension is 50 μm. The insulating film 24 more preferably has heat resistance.

As illustrated in FIG. 5, in the coil section 20, corners 21b of the conductive member 21 on which the insulating film 24 is formed are chamfered. In the present embodiment, the corners 21b are rounded. As a method of rounding the corners 21b, a method of grinding the corners 21b using, for instance, a mechanical, chemical, or electrical method may be used. Each of the corners 21b of the conductive member 21 is not limited to a rounded shape, and may have a shape such as an angular face. It is only necessary that the corner 21b of the conductive member 21 not be a shape in which faces forming the corner 21b intersect each other approximately at right angles.

The terminal parts 22a and 22b are connected to respective opposite ends of the coil section 20. The conductive members 21 of the opposite ends of the coil section 20 are lengthened, and thereby the terminal parts 22a and 22b are formed. The terminal parts 22a and 22b may be formed by connecting other members to the opposite ends of the coil section 20.

As illustrated in FIG. 2, the coil 9 is mounted on the core 12 by a bobbin 14. The bobbin 14 has a tubular shape. The bobbin 14 is a member that has an electrical insulation property, and is formed of, for instance, nylon, nylon containing fiberglass, a polybutylene terephthalate resin, a polyethylene terephthalate resin, an ABS resin, a polyamide resin, a polyphenylene sulfide resin, a liquid crystal polyester resin, or the like. The bobbin 14 is fitted around the core 12, and an upper end thereof is seized by the flange part 12b of the core 12. Thereby, the bobbin 14 is prevented from escaping from the core 12.

As illustrated in FIG. 2, the coil section 20 of the coil 9 is mounted on the core 12 such that one side thereof having a small width dimension is located at the base end side of the core 12. That is, the width dimension of the coil section 20 gradually increases toward a tip side of the core 12. Thereby, in the stator 3, a space factor of the coil section 20 in the fan-like space S formed by the core 12 can be enhanced. In the present embodiment, the space factor is, for instance, higher than or equal to 90%.

The rotor 5 is rotatably provided. The rotor 5 has a motor case 30 and a plurality of magnets 32. The motor case 30 has a cylindrical shape. The magnets 32 are disposed inside the motor case 30. To be specific, the magnets 32 are provided on an inner circumferential surface of the motor case 30 via a yoke (not shown), and are arranged in a circumferential direction of the motor case 30. To be more specific, the magnets 32 having different polarities are alternately arranged on the inner circumferential surface of the motor case 30.

In the motor 1 having the above configuration, an electric current flows to the coils 9, and thereby the rotor 5 is rotated depending on a value of the electric current.

As described above, in the motor 1 according to the present embodiment, the cores 12 are provided to protrude from the outer circumferential surface 10a of the annular part 10 in the radial direction of the annular part 10. In this configuration, a fan-like space S is defined between the neighboring cores 12. In this configuration, the width dimension of the coil section 20 gradually increases from one side to the other side in the direction of the axis L of the coil section 20. The one side of the coil section 20 is arranged on the core 12 to be located at the base end side of the core 12. With this configuration, since the coil section 20 is arranged on the core such that the width thereof is widened toward the tip side of the core 12, a space factor of the coil section 20 can be enhanced in the fan-like space S defined by the cores 12. The insulating film 24 having an electrical insulation property is provided on the surface 21a of the conductive member 21 of the coil section 20. For this reason, the generation of creeping discharge or the like between the conductive members 21 and 21 is suppressed. In the motor 1 having the coils 9, the distortion of waveforms of an induced electromotive force generated by rotation can be suppressed. Therefore, in the motor 1, the generation of torque ripples can be suppressed, and the rotation of the rotor 5 is made uniform. As a result, in the motor 1, the performance can be improved.

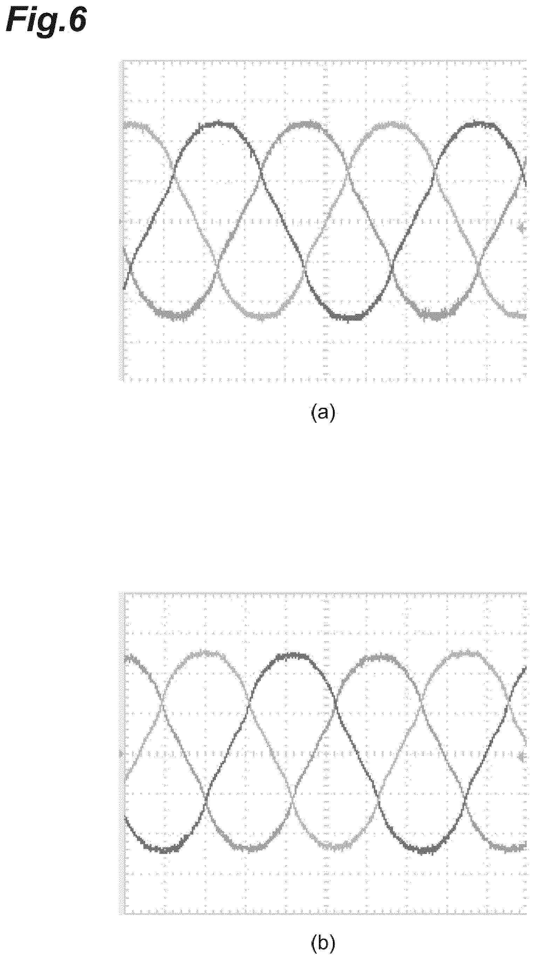

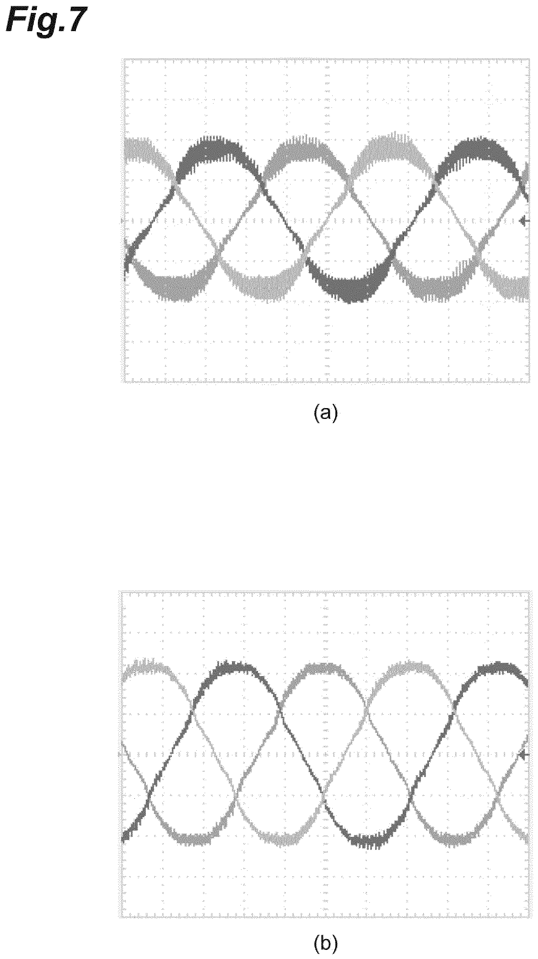

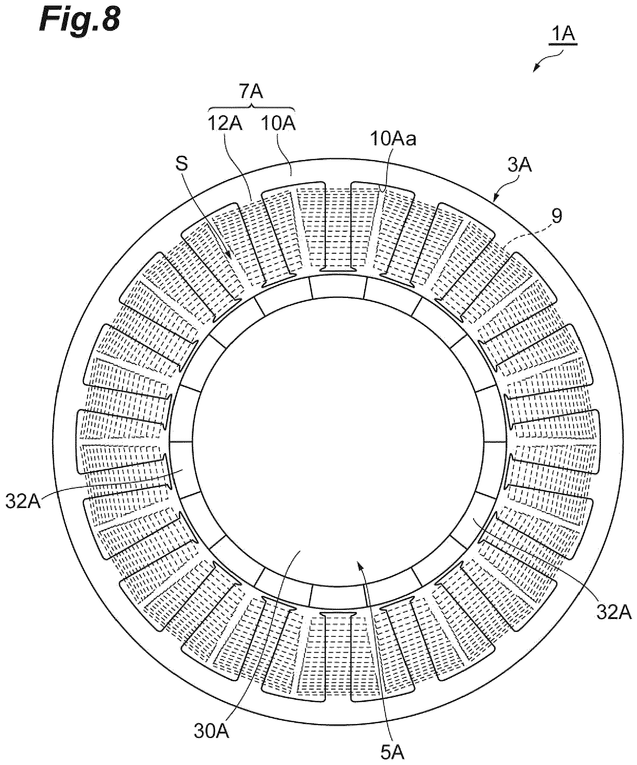

The performance of the motor 1 will be concretely described. FIG. 6 is a diagram illustrating waveforms of an induced electromotive force of the motor according to the present embodiment. FIG. 7 is a diagram illustrating waveforms of an induced electromotive force of a motor according to a comparative example. The waveforms of the induced electromotive force shown in FIG. 6 are waveforms of a motor 1A shown in FIG. 8.

First, the motor 1A will be described. FIG. 8 is a view illustrating a modification of the motor. As illustrated in FIG. 8, the motor 1A is an inner rotor type three-phase motor. The motor 1A includes a stator 3A and a rotor 5A. The stator 3A has an iron core section 7A and coils 9. The iron core section 7A has an annular part 10A with an annular shape, and cores 12A.

The cores 12A are provided to protrude inward from an inner circumferential surface 10Aa of the annular part 10A in a radial direction of the annular part 10A. A plurality of cores 12A are arranged at predetermined intervals in a circumferential direction of the inner circumferential surface 10Aa of the annular part 10A. The cores 12A have, for instance, prismatic shapes. A fan-like space S is defined between the two neighboring cores 12A by the two cores 12A. The coils 9 are arranged at the cores 12A by bobbins (not shown). Each of the coils 9 is mounted on the core 12A such that one side thereof having a great width dimension of the coil section 20 is located at a base end side of the core 12A. The number of turns of the coil section 20 of the coil 9 is set to "38."

The rotor 5A has a rotary body 30A and a plurality of magnets 32A. The rotary body 30A has a columnar shape.

The magnets 32A are disposed outside the rotary body 30A. To be specific, the magnets 32A are provided on an outer circumferential surface of the rotary body 30A via a yoke (not shown), and are arranged in a circumferential direction of the rotary body 30A. To be more specific, the magnets 32A having different polarities are alternately arranged on the outer circumferential surface of the rotary body 30A.

The waveforms of the induced electromotive force shown in FIG. 7 are waveforms of the motor of the comparative example which includes coils formed by concentrically winding a round enamel wire. The motor of the comparative example has a coil configuration different from that of the motor 1A, and other configurations (cores, a rotor, etc.) identical to those of the motor 1A. The motor of the comparative example has coils formed by winding a round enamel wire around the cores 80 times.

In FIGS. 6 and 7, (a) shows the waveforms of the induced electromotive force when a rotational frequency is 100 rpm, and (b) shows the waveforms of the induced electromotive force when a rotational frequency is 250 rpm. In the motor 1A and the motor of the comparative example, distortion factors when the rotational frequency is changed are represented in Table 1 below.

[Table 1]

| Rotational frequency [rpm] | Motor 1A | Motor of comparative example |
|---|---|---|
| | Distortion factor [%] | |
| 100 | 4.6 | 14.8 |
| 150 | 4.7 | 10.9 |
| 250 | 3.0 | 5.2 |

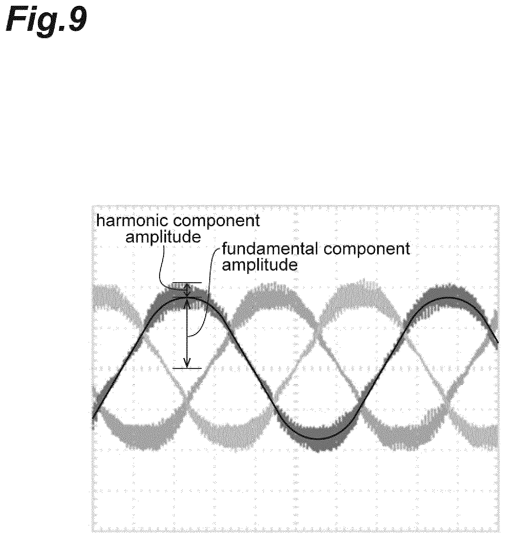

As illustrated in FIGS. 6 and 7, the waveforms of the induced electromotive forces of the motor 1A and the motor of the comparative example, that is the waveforms of the induced electromotive forces generated when the motors are rotated, are approximate sine waves. Here, the sine wave is a waveform (a waveform indicated in FIG. 9 by a solid line) in which the distortion factor to be described below is 0%, and an approximate sine wave is a waveform that is extremely close to the sine wave or a waveform that is regarded as the sine wave. As shown in Table 1, in comparison with the waveforms of the induced electromotive force of the motor of the comparative example, the waveforms of the induced electromotive force of the motor 1A are small in the distortion factor from the sine wave even at any of 100 rpm, 150 rpm, and 250 rpm despite the fact that the number of turns in the coil is less than or equal to 1/2. Here, the distortion factor from the sine wave will be described with reference to FIG. 9.

In the present embodiment, the distortion factor indicates a ratio of a harmonic component amplitude to a fundamental component amplitude at a peak point of the waveform of the induced electromotive force. As illustrated in FIG. 9, the fundamental component amplitude is an amplitude of a fundamental wave (a distortion-free sine wave). The harmonic component amplitude is an amplitude of a higher frequency component of the integral multiple of the fundamental wave. The distortion factor is obtained from the following expression. In Table 1, the distortion factors of all three of the phases are calculated on the basis of the following expression, and are averaged to calculate the distortion factor.

$$\text{Distortion factor} = ((\text{Harmonic component amplitude})/(\text{Fundamental component amplitude})) \times 100 [\%]$$

As shown in Table 1, in the waveforms of the induced electromotive force of the motor of the comparative example, the distortion factor from the sine wave is 14.8% at 100 rpm, whereas in the waveforms of the induced electromotive force of the motor 1A, the distortion factor from the sine wave is 4.6%. That is, the distortion factor from the sine wave at 100 rpm in the waveforms of the induced electromotive force of the motor 1A is about 1/3 of the distortion factor from the sine wave in the waveforms of the induced electromotive force of the motor of the comparative example. The distortion factor (3.0%) from the sine wave even at 250 rpm in the waveforms of the induced electromotive force of the motor 1A is smaller than the distortion factor (5.2%) from the sine wave in the waveforms of the induced electromotive force of the motor of the comparative example. That is, in comparison with the motor of the comparative example, the motor 1A according to the present embodiment is small in the distortion factor over a wide range from a case in which the rotational frequency is low to a case in which the rotational frequency is high.

In the motor 1A according to the present embodiment, the distortion factor at a rotational frequency of 100 rpm is preferably less than or equal to 10%, and more preferably less than or equal to 5%. In the motor 1A, the distortion factor at a rotational frequency of 150 rpm is preferably less than or equal to 10%, and more preferably less than or equal to 5%. In addition, in the motor 1A, the distortion factor at a rotational frequency of 250 rpm is preferably less than or equal to 5%, and more preferably less than or equal to 3%.

In general, the motor has a smaller torque ripple in the case in which the distortion factor is small (the ratio of the harmonic component is small, and the distortion of the sine wave is small) than in the case in which the distortion factor is great (the ratio of the harmonic component is great, and the sine wave is distorted). For this reason, in the motor 1A, it is confirmed that, in comparison with the coil configured by the concentrical winding of the enamel wire, a variation in torque caused by the torque ripple is small, and the rotation is smooth. Thereby, even in a low rotation region, the rotor 5A is smoothly rotated. This result is similarly obtained in the motor 1 (the outer rotor type).

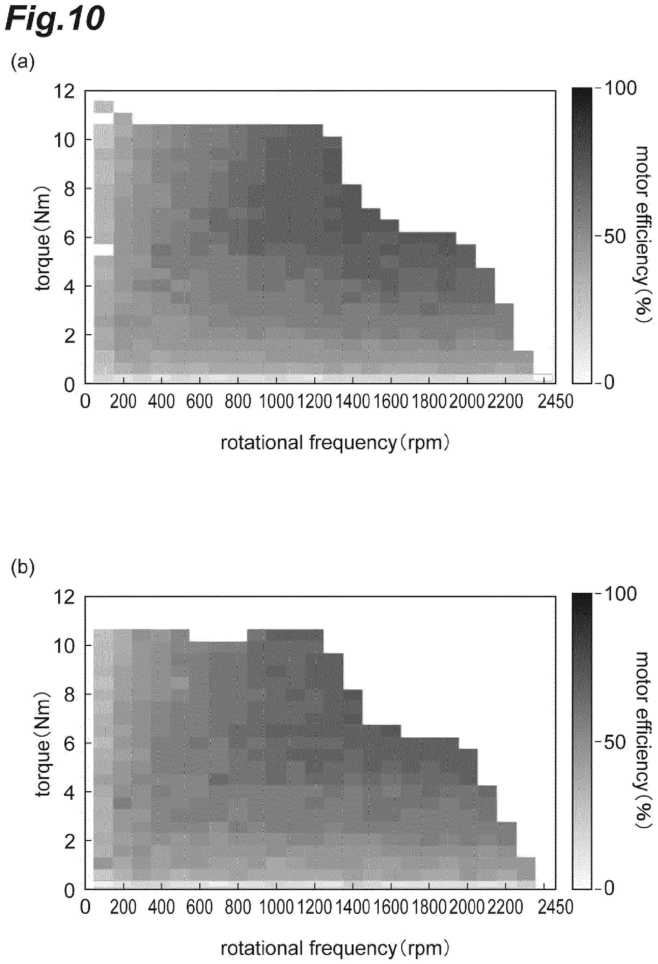

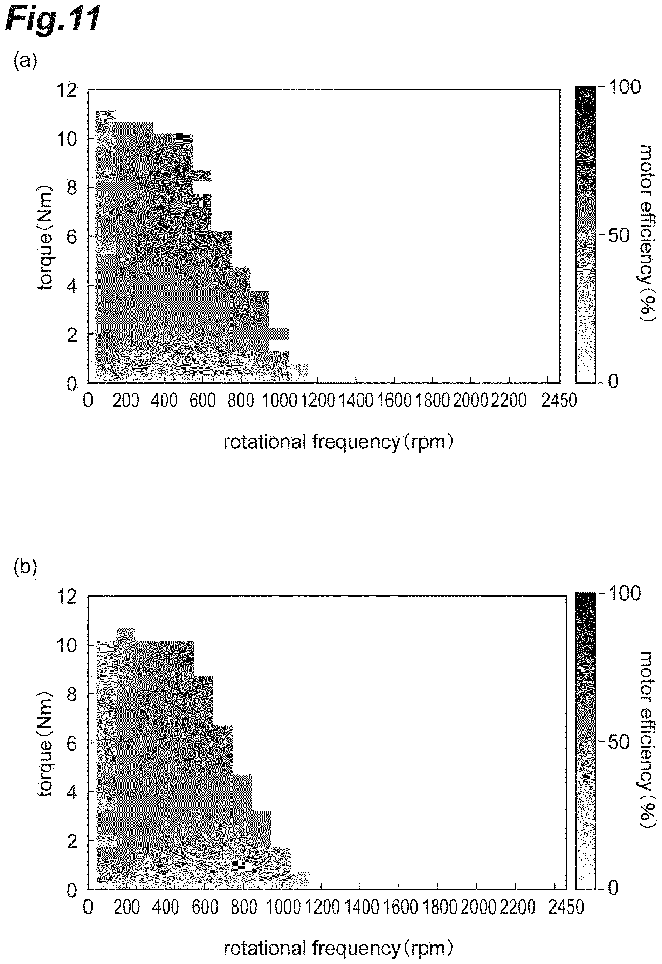

FIG. 10 is a diagram illustrating a relationship (hereinafter referred to as "efficiency map") of motor efficiency to rotational frequency and torque of the motor 1A according to the present embodiment. FIG. 11 is a diagram illustrating an efficiency map of the motor according to the comparative example. The efficiency maps shown in FIGS. 10 and 11 are measured with a reducer connected to the motor. For this reason, in the efficiency maps shown in FIGS. 10 and 11, the rotational frequency of the motor is 1/4 times, and the torque is four times. FIGS. 10(a) and 11(a) illustrate the efficiency map of a case measured at room temperature, and FIGS. 10(b) and 11(b) illustrate the efficiency map of a case measured at a high temperature (60°C).

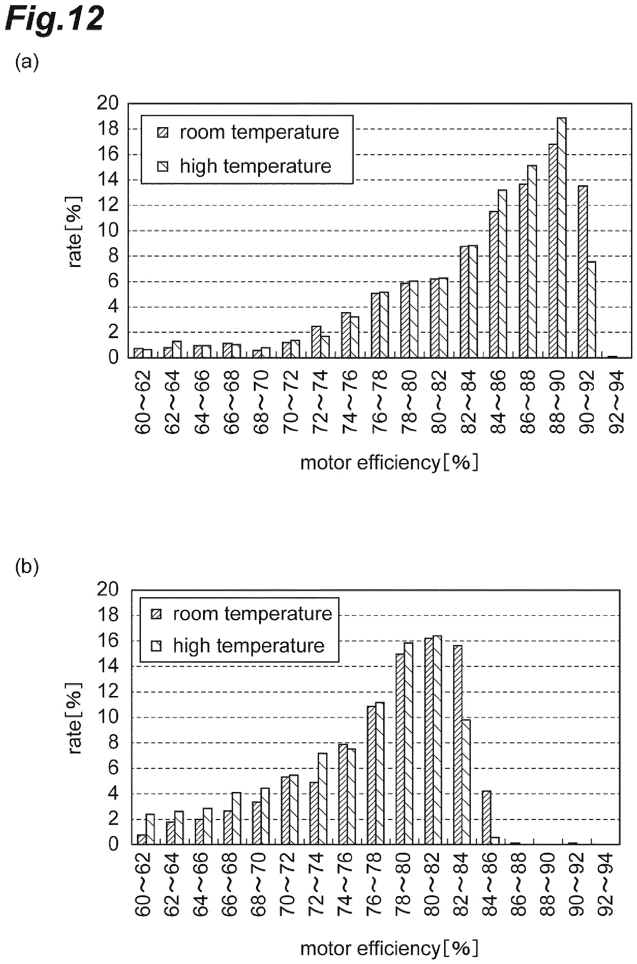

FIG. 12 is a diagram illustrating motor efficiency and rate. In FIG. 12, to quantitatively evaluate the efficiency maps of FIGS. 10 and 11, a value of the motor efficiency is shown in units of 2% and as a rate with respect to an entire measurement range. FIG. 12(a) shows results of the motor 1A, and FIG. 12(b) shows results of the motor of the comparative example. In Table 2, rates with respect to an entire driving range in which the motor efficiency is greater than or equal to 90% and a maximum efficiency are shown.

[Table 2]

| | Rate [%] with respect to entire driving range in which motor efficiency is greater than or equal to 90% | | Maximum efficiency [%] | |
|---|---|---|---|---|
| | Room temperature | High temperature | Room temperature | High temperature |
| Motor 1A | 13.6 | 7.6 | 92.0 | 91.6 |
| Motor of comparative example | 0.1 | 0 | 90.6 | 85.6 |

As shown in FIGS. 10, 11 and 12 and Table 2, the motor 1A has higher efficiency than the motor of the comparative example in a wide driving range. Further, even with regard to the rates and the maximum efficiency with respect to the entire driving range in which the motor efficiency is greater than or equal to 90% at a high temperature, the motor 1A is higher than the motor of the comparative example.

In general, the motor having high maximum efficiency as well as high efficiency in the wide driving range is obtained. It is found from the results shown in FIGS. 10, 11 and 12 and Table 2 that the motor 1A is high in performance compared to the motor of the comparative example.

In the present embodiment, the insulating film 24 is formed by dip coating or electrodeposition coating. Thereby, the insulating film 24 can be formed well on the surface 21a of the conductive member 21.

In the present embodiment, the corners 21b of the conductive member 21 are chamfered. When the corners 21b of the conductive member 21 are approximately right angles, it is difficult for the insulating film 24 to be formed on the corners 21b, and it is easy for the insulating film 24 to peel off at the corners 21b. The insulating film 24 can be formed well even at the corners 21b by chamfering the corners 21b of the conductive member 21. Therefore, the insulation property can be even more secured in the coil section 20.

In the present embodiment, the coil section 20 is formed by joining the plurality of conductive members 21. Thereby, a desired shape of the coil section 20 can be easily formed. For this reason, the formation of a gap between the core 12 and the coil section 20 can be suppressed. As a result, the space factor of the coil 9 can be enhanced.

In the present embodiment, the cross-sectional area of the conductive member 21 on the plane orthogonal to the extending direction of the conductive member 21 is uniform throughout the circumference of the coil section 20. Thereby, a value of electrical resistance becomes constant in the coil section 20. For this reason, the performance of the coil 9 can be improved.

In the present embodiment, the insulating film 24 has a thickness of 10 $\mu$m or more. Thereby, the insulation property between the conductive members 21 in the coil section 20 can be secured, and the creeping discharge can be suppressed.

The present invention is not limited to the above embodiments. For example, in the above embodiments, the motor 1 (the motor 1A) acting as the rotating electric machine has been described by way of example. However, the rotating electric machine may be, for instance, an electric generator or the like.

In the above embodiments, the configuration in which the cross-sectional area of the conductive member 21 is uniform over the entirety of the coil section 20 has been described by way of example. However, the cross-sectional area of the conductive member 21 is not necessarily uniform over the entirety.

In the above embodiments, the configuration in which the motor 1 or 1A is illustrated in FIG. 1 or 8 has been described by way of example. However, the number of cores 12 or 12A (the number of coils 9) and the number of magnets 32 or 32A may be adequately set depending on design.

In the above embodiments, the configuration in which the plurality of conductive members 21 are joined to form the coil 9 has been described by way of example. However, the method of forming the coil 9 is not limited thereto.

In the above embodiments, the configuration in which the coil section 20 is formed by joining the first portion 20a of a linear shape and the second portion 20b of a linear shape has been described by way of example. However, the formation of the coil section 20 is not limited to the junction between the first and second portions 20a and 20b of the linear shapes. The coil section 20 may be formed by joining first and second portions having other shapes.

In the above embodiments, the configuration in which the iron core section 7 has the annular part 10 of an annular shape has been described by way of example. However, the profile of the main body part may have a circular shape and, for instance, a disc shape.

In the above embodiments, the configuration in which the insulating film 24 is formed by dip coating or electrodeposition coating has been described by way of example. However, the method of forming the insulating film 24 is not limited thereto.

In the above embodiments, the configuration in which the coil 9 is mounted on the bobbin 14 has been described by way of example. However, the bobbin 14 may not be provided. In this case, the coil 9 is integrally molded by covering an outside of the insulating film 24 with a resin. Thereby, the bobbin 14 can be omitted, and the coil device can be simplified. The resin used to mold the coil 9 can be the same resin as the bobbin 14. Aside from the material of the aforementioned bobbin 14, thermosetting resins such as an epoxy resin or thermoplastic resins may be used. As the method of molding the coil 9, an injection molding method or a powder fluidized bed dipping method may be used.

**Reference Signs List**

| | |
|---|---|
| 1, 1A | Motor (rotating electric machine, coil device) |
| 7, 7A | Iron core section |
| 9 | Coil |
| 10, 10A | Annular part (main body part) |
| 10a | Outer circumferential surface (circumferential surface) |
| 10Aa | Inner circumferential surface (circumferential surface) |
| 12, 12A | Core |
| 20 | Coil section |
| 21 | Conductive member |
| 21a | Surface |
| 21b | Corner |
| 22a, 22b | Terminal part |
| 24 | Insulating film |
| L | Axis |

**Claims**

1. A rotating electric machine comprising:

   a stator having an iron core section with a main body part that has a circular circumferential surface and a plurality of cores that protrude from the circumferential surface of the main body part in a radial direction of the main body part and are provided at predetermined intervals in a circumferential direction of the circumferential surface, and coils arranged on the cores; and
   a rotor configured to rotate relative to the stator,
   wherein each of the coils includes a coil section that is formed in a spiral shape from a conductive member having conductivity, and terminal parts that are connected to opposite ends of the coil section,
a width dimension of the coil section gradually increases from one side to the other side in a direction of an axis of the coil section, and
an insulating film having an electrical insulation property is provided on a surface of the conductive member of the coil section.

2. The rotating electric machine according to claim 1, wherein a waveform of an induced electromotive force generated by rotation is a sine wave or a quasi-sine wave.

3. The rotating electric machine according to claim 1 or 2, wherein the rotating electric machine is an inner rotor type three-phase motor.

4. A coil arranged on a core comprising:

a coil section formed in a spiral shape from a conductive member having conductivity; and
terminal parts connected to opposite ends of the coil section,
wherein a width dimension of the coil section gradually increases from one side to the other side in a direction of an axis of the coil section, and
an insulating film having an electrical insulation property is provided on a surface of the conductive member of the coil section.

5. The coil according to claim 4, wherein the insulating film is formed by dip coating or electrodeposition coating.

6. The coil according to claim 4 or 5, wherein the corners of the conductive member are chamfered.

7. The coil according to any one of claims 4 to 6, wherein the coil section is formed by joining the numerous conductive members.

8. The coil according to any one of claims 4 to 7, wherein a cross-sectional area of the conductive member on a plane orthogonal to an extending direction of the conductive member is uniform throughout a circumference of the coil section.

9. The coil according to any one of claims 4 to 8, wherein the insulating film has a thickness of 10 $\mu$m or more.

10. A coil device comprising:

an iron core section having a main body part that has a circular circumferential surface and a plurality of cores that protrude from the circumferential surface of the main body part in a radial direction of the main body part and are provided at predetermined intervals in a circumferential direction of the circumferential surface; and
coils arranged on the cores,
wherein each of the coils includes a coil section that is formed in a spiral shape from a conductive member having conductivity, and terminal parts that are connected to opposite ends of the coil section,
a width dimension of the coil section gradually increases from one side to the other side in a direction of an axis of the coil section, and
an insulating film having an electrical insulation property is provided on a surface of the conductive member of the coil section.

*Fig.1*

# Fig.2

*Fig.3*

*Fig.4*

# Fig.5

*Fig.6*

(a)

(b)

*Fig.7*

(a)

(b)

*Fig.8*

# *Fig.9*

harmonic component
amplitude
fundamental component
amplitude

## *Fig.10*

(a)

(b)

Fig.11

(a)

(b)

# *Fig.12*

(a)

(b)

## INTERNATIONAL SEARCH REPORT

| International application No. |
| --- |
| PCT/JP2016/053529 |

**A. CLASSIFICATION OF SUBJECT MATTER**
*H02K3/18(2006.01)i*

According to International Patent Classification (IPC) or to both national classification and IPC

**B. FIELDS SEARCHED**

Minimum documentation searched (classification system followed by classification symbols)
H02K3/18

Documentation searched other than minimum documentation to the extent that such documents are included in the fields searched
Jitsuyo Shinan Koho        1922–1996    Jitsuyo Shinan Toroku Koho    1996–2016
Kokai Jitsuyo Shinan Koho  1971–2016    Toroku Jitsuyo Shinan Koho    1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2007-317636 A (Mitsubishi Cable Industries, Ltd.), 06 December 2007 (06.12.2007), claims; fig. 1 to 5 & JP 2013-9593 A          & US 2009/0102309 A1 claims; fig. 1 to 5 & US 2011/0163626 A1     & US 2011/0174042 A1 & US 2011/0162423 A1     & WO 2007/125838 A1 & EP 2017854 A1 | 1–10 |

☐ Further documents are listed in the continuation of Box C.     ☐ See patent family annex.

| | |
| --- | --- |
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 18 April 2016 (18.04.16) | 26 April 2016 (26.04.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006101606 A
- JP 2006254638 A
- JP 2003116236 A
- JP 2008172866 A

**Non-patent literature cited in the description**

- **SHINJI MAKITA et al.** Permanent magnet synchronous motor having new winding structure reconciling high winding factor and high space factor. *the journal D of the institute of electricl engineers (the IEEJ transactions on industry applications), IEEJ Transactions on Industry Applications,* June 2014, vol. 134 (12), 1031-1037